# DEMANDE DE BREVET EUROPEEN

(11) **EP 0 611 212 A1**
(43) Date de publication de la demande: **17.08.1994**
(21) Numéro de dépôt: 94400287.2
(22) Date de dépôt: 10.02.1994
(51) Int. Cl.: C03B 3/00, C21B 5/00, C21B 5/02

(54) **Introduction d'additifs pulvérulents dans un four**

(30) Priorité: 12.02.1993 IT MI930269
(71) Demandeur: ISOVER SAINT-GOBAIN, F-92400 Courbevoie (FR)
(72) Inventeur: Burg, Daniel, I-20135 Milano (IT); Colpani, Giovanni, I-24058 Romano Lombardo (IT)
(74) Mandataire: Muller, René

(57) **Abrégé**

On propose une méthode pour introduire des matières pulvérulentes dans un cubilot ou un haut-fourneau.

L'introduction se fait dans les fumées ou dans les tuyères d'alimentation en gaz comburant. Ce sont les granulés eux-mêmes qui font l'étanchéité entre la zone en pression et l'extérieur.

Une variante ne présente aucune pièce en mouvement en contact avec les granulés, une autre utilise une vis sans fin en rotation dans un tube.

La méthode est adaptée en particulier à la réintroduction dans les tuyères d'alimentation des poussières recueillies dans les fumées et à l'introduction dans les fumées, de matières pulvérulentes.

## Description

L'invention concerne les fours industriels, en particulier, les cubilots ou les hauts fourneaux, dont l'atmosphère interne et les tuyères d'alimentation en gaz, sont le plus souvent à des pressions différentes de celles de l'ambiance extérieure et où l'on souhaite introduire des matières pulvérulentes.

Dans l'industrie, de nombreux procédés d'élaboration à chaud de produits à partir de matières premières utilisent un carburant, comme le coke par exemple, mélangé à la matière première, dans ce cas, le gaz comburant, air et/ou oxygène est introduit sous pression à une extrémité du four à l'aide de tuyères tandis que les fumées sortent à l'autre extrémité. On désire souvent introduire dans le four certains éléments utiles à l'élaboration de la matière soit en les faisant véhiculer par le gaz introduit sous pression, soit en les introduisant à contre-courant dans les fumées mais dans tous les cas, en évitant de mettre l'atmosphère interne en communication avec l'extérieur.

C'est ainsi que par exemple, dans la fabrication de laine de roche à partir de matières premières à base de laitiers de haut-fourneau et de roches basaltiques fondues dans un cubilot on souhaite introduire des matières pulvérulentes pour qu'elles soient ajoutées au mélange vitrifiable.

Ces techniques de production de laine de roche à partir de matériaux à haut point de fusion sont plus généralement dénommées à "centrifugation libre". Ici, on conduit le matériau à fibrer, à l'état fondu, à la périphérie de trois ou quatre roues de centrifugation à axe horizontal, disposées à proximité l'une de l'autre, le matériau étant déversé sur une première roue qui l'accélère, et renvoyé sur la roue suivante. Chaque roue transforme en fibres une partie du matériau fondu et renvoie l'excès sur la roue suivante.

Le matériau est ordinairement fondu dans des fourneaux du type "cubilot" utilisé en fonderie. Les cubilots, de forme générale cylindrique à axe vertical, sont chargés à leur partie supérieure avec des couches successives alternées de combustible, généralement du coke et du matériau à fibrer. La zone de combustion se situe dans la partie inférieure du cubilot, au voisinage des tuyères par lesquelles est insufflé le gaz comburant, généralement de l'air éventuellement enrichi d'oxygène. La température dégagée par la combustion entraîne la fusion du matériau à fibrer qui s'échappe par un trou de coulée situé à un niveau légèrement inférieur au niveau des tuyères. Enfin au fond du cubilot s'accumulent les résidus de fonte, provenant soit des nodules inclus dans le laitier, soit de la réduction d'oxydes de fer du reste de la charge. Quoique la fonte de plus grande densité se sépare naturellement du matériau à fibrer à l'état fondu, le trou de coulée doit être au niveau le plus élevé possible afin que ne s'échappent pas également de petites quantités de fonte qui entraîneraient une usure rapide des roues de centrifugation.

De telles enceintes de fusion sont très avantageuses, si l'on considère les débits très importants de produits fondus et le faible coût énergétique de cette fusion. Dans une telle enceinte, la fusion de la roche est relativement lente, il faut veiller à ce que les gaz comburants et les gaz produits de la combustion puissent circuler très facilement dans la zone de fusion et surtout, pour ces derniers, puissent s'échapper en direction de la cheminée. Pour cela la charge ne doit pas être trop compacte sous peine de la création d'une surpression dans la zone de fusion, surpression qui conduit à une augmentation des turbulences dans la zone de coulée. C'est pourquoi la charge de matière première est de préférence introduite sous forme de blocs ou briquettes extrudés, par exemple cylindriques.

Une telle méthode de préparation de la charge en briquettes est bien connue, par exemple du brevet US 2 020 403. Ces briquettes présentent de plus l'avantage d'être constituées des produits de récupération des poussières des fumées, des infondus et des déchets de fibres qui peuvent ainsi être réintroduits dans le cubilot. La technique permet également un ajustement de la composition de matières premières. Cependant, en particulier pour les produits récupérés dans les fumées, il est relativement compliqué de les rassembler, de les stocker après refroidissement et de les transporter sur le lieu de fabrication des briquettes. De plus, la fabrication des briquettes qui consiste à agglomérer les matières pulvérulentes à l'aide d'un liant, coûte cher. Il serait intéressant de pouvoir procéder au recyclage directement sur place ce qui permettrait, de plus, dans le cas des poussières, issues des fumées, de réaliser une économie d'énergie en évitant d'avoir à les réchauffer.

De même, dans les hauts fourneaux, il est connu d'introduire du coke sous forme pulvérulente en le faisant véhiculer par le gaz comburant.

Les techniques existant pour l'introduction de coke en poudre se rattachent à deux grands groupes, les unes utilisant un gaz vecteur additionnel, les autres l'effet Venturi. Dans l'un des groupes comme dans l'autre, la difficulté est de doser la quantité de matières pulvérulentes introduite dans chaque tuyère. Dans ces deux groupes de techniques, les difficultés sont liées au fait que les quantités de poudre introduites sont fortement dépendantes des conditions d'écoulement du gaz vecteur dans les tuyères et, en aval de celles-ci, dans le four lui-même.

L'invention se donne pour tâche de fournir une technique qui permette d'introduire des quantités déterminées de matières pulvérulentes dans un réacteur où sont traitées des matières solides et des gaz tel qu'un four d'élaboration de matières fondues, fonte ou matières vitrifiées et en particulier dans les gaz des fours tels que des cubilots ou des hauts fourneaux.

En particulier, l'invention doit donner la possibilité de réaliser cette introduction à des débits qui soient indépendants des conditions d'exploitation du four comme par exemple la pression des gaz à la sortie ou la pression ou la vitesse des gaz dans les tuyères.

Parmi les documents qui proposent des méthodes pour introduire des poudres dans les hauts fourneaux, la plupart proposent de les introduire dans les tuyères d'alimentation en gaz comburant, citons le brevet des Etats-Unis US 5 123 632 dans lequel, des poudres de charbon sont stockées dans des silos pour être réparties dans des tuyères grâce à un distributeur qui répartit le débit de poudre équitablement entre les canalisations aboutissant à chaque tuyère. Le document propose, grâce à un gaz auxiliaire, de maintenir constante la pression dans chacune des canalisations pour que le débit, lui aussi reste constant à l'orifice de chaque tuyère et cela malgré les variations de pression (et de température) dans le four.

Un autre document, US 5 070 797 propose d'utiliser un système de Venturi pour introduire différents éléments pulvérulents, principalement du charbon, dans l'air de combustion d'un cubilot au niveau de la tuyère. Le système comporte un circuit d'air sous pression avec un rétrécissement suivi d'un élargissement et l'introduction de la poudre, dans l'axe, précisément à l'endroit le plus étroit. US 5 070 597 prévoit également un système de compensation de pression pour que le débit soit indépendant des fluctuations de pression qui peuvent exister dans le cubilot. Parmi les matières qu'il est envisagé d'introduire dans le four par le moyen décrit, figurent à la fois des sous-produits d'origines diverses et des poussières récupérées lors du filtrage des fumées du cubilot.

Ainsi, les moyens connus pour introduire des matières pulvérulentes dans un cubilot ou un haut-fourneau nécessitent des systèmes additionnels qui garantissent un débit déterminé. De tels systèmes sont relativement complexes car ils nécessitent une détection des variations de pression dans les tuyères pour qu'une compensation des variations de débit résultantes puisse se réaliser.

L'invention propose un procédé pour l'introduction de matières dans les gaz d'un réacteur tel qu'un haut-fourneau ou un cubilot dans lequel les matières sont pulvérulentes et où ce sont les matières pulvérulentes elles-mêmes, en masse compacte, qui assurent l'étanchéité entre la zone a alimenter et l'extérieur. De préférence, l'introduction est effectuée dans les tuyères d'alimentation du réacteur en gaz comburant ou dans les gaz issus du réacteur au cours de leur trajet vers la sortie.

Ce procédé autorise ainsi l'introduction de matières granulées dans des zones où les gaz sont le plus souvent sous pression et/ou dangereux et où il est par conséquent indispensable d'empêcher tout échange de gaz entre l'intérieur et l'extérieur du réacteur.

L'invention prévoit l'application du procédé à l'introduction dans le réacteur de matières premières et au recyclage dans le réacteur, de déchets endogènes ou exogènes, si nécessaire, après broyage ou déchiquetage ainsi qu'au recyclage dans le réacteur des poussières recueillies dans les gaz qui en sont issus et dans le cas de la fabrication de produits fibreux, au recyclage des grains infibrés dans le réacteur.

Ainsi appliqué, le procédé de l'invention rend possible l'utilisation directe de matières premières pulvérulentes ou le recyclage immédiat et bon marché des matières les plus diverses.

L'invention propose également un dispositif pour mettre en oeuvre le procédé, il comporte un tube transportant les matières à introduire sous forme pulvérulente qui y forment un bouchon dont l'épaisseur est telle qu'elles s'opposent au passage des gaz. Ou bien, le tube transportant les matières pulvérulentes débouche dans une zone du réacteur où transitent les gaz avant d'en sortir, et alors, le tube débouche dans une zone où les gaz brulés sortant d'un cubilot ou d'un haut fourneau transitent avant de traverser un dispositif de filtrage pour atteindre la sortie des fumées, le dispositif de filtrage étant constitué de préférence par les matières premières elles-mêmes que les gaz brulés doivent traverser avant de sortir, ou bien le tube transportant les matières pulvérulentes débouche dans une canalisation d'alimentation en gaz du réacteur et en particulier dans les tuyères d'alimentation en air ou en oxygène d'un cubilot ou d'un haut fourneau.

Le tube transportant les matières sous forme pulvérulente qui constitue l'essentiel du dispositif selon l'invention est avantageusement soit une vis sans fin en rotation dans un tube, soit un tube dressé rempli de matières pulvérulentes jusqu'à un niveau minimum et dont la base est obturée. Ou bien, la base du tube est obturée par une vanne-guillotine commandée pour maintenir l'épaisseur du bouchon de matières pulvérulentes supérieure à une valeur minimale, ou bien, la partie inférieure est coudée et un vibreur en partie basse du tube y maintient un niveau défini.

On voit que les dispositifs prévus pour mettre en oeuvre le procédé de l'invention sont très simples et bon marché.

Les techniques de l'invention permettent de maîtriser le débit d'introduction des matières pulvérulentes dans les gaz soit, comme dans le cas d'introduction d'éléments de composition ou de déchets exogènes, avec un rythme qu'on choisit en fonction des paramètres de production, soit, s'il s'agit du recyclage immédiat de déchets endogènes, avec réintroduction instantanée et complète des déchets produits. Mais ce débit d'introduction est toujours indépendant des conditions de pression à l'intérieur du réacteur.

La description et les figures qui suivent permettent de comprendre le fonctionnement de l'invention.

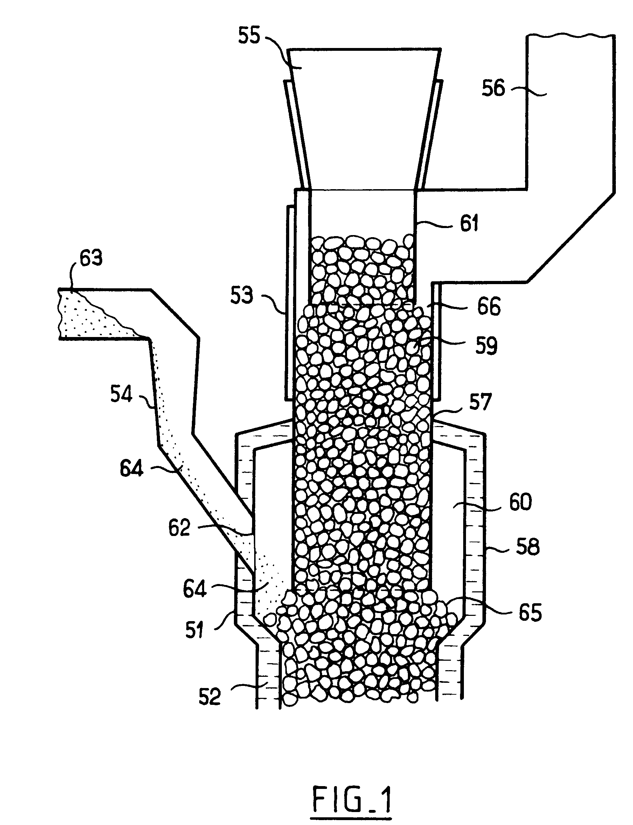

Parmi les figures, la **figure 1** représente un cubilot et un apport de particules dans les fumées,
la **figure** **2** montre un dispositif d'introduction à vis sans fin,
la **figure 3** montre un dispositif de réintroduction au niveau des tuyères de gaz comburant, des poussières récupérées dans les fumées,
et les **figures** **4 et** **5**, des dispositifs utilisant un tube dressé.

Dans la production de laine de roche par la technique de cubilot et de la "centrifugation libre", on introduit les matières premières essentiellement sous forme de blocs, ou bien naturels, lorsqu'il s'agit de roches basaltiques fragmentées, ou bien résultant d'une élaboration antérieure comme par exemple le coke ou les laitiers, qui sont des sous-produits de la production de la fonte, ou bien les briquettes, constituées spécialement pour réintroduire des déchets et ajuster la composition. Pour différentes raisons, on est intéressé à introduire certains éléments de la composition directement sous forme pulvérulente. Il s'agit en tout premier lieu de ce qui est produit sur place comme les infibrés - grains de matière éjectés des centrifugeurs sans avoir pu former de fibres - ou surtout les résidus solides qui quittent le cubilot entraînés par les fumées. Ce sont des poussières de composition et de coke mélangées. Il s'agit donc d'un produit directement assimilable puisque sa composition s'écarte peu de celle des matières enfournées. Par ailleurs, leur température est élevée et leur réintroduction immédiate économise la chaleur qui serait nécessaire pour les réchauffer. On souhaite également introduire sous forme pulvérulente des matières premières dans le but d'ajuster précisément la composition du matériau en cours d'élaboration dans le cubilot. L'introduction de déchets d'origine extérieure, réduits en poussière est également intéressante.

la **figure 1** montre la partie supérieure d'un cubilot où l'on élabore la matière vitreuse qui permettra de fabriquer de la laine de roche par centrifugation.

On voit en 51 le corps du cubilot proprement dit avec sa double paroi où circule l'eau de refroidissement 52. Ce cubilot a été modifié pour y introduire le dispositif de l'invention. Habituellement les parties marquées 53 et 54 n'existent pas et la trémie 55 de même que le conduit 56 qui évacue les fumées vers le cyclone et la cheminée non représentés sont tous deux placés plus bas, la trémie 55 sur l'ouverture haute du cubilot en 57 et le conduit 56 sur la paroi 58, au même niveau que le canal 54 issu du dispositif 63. Les parties rajoutées au cubilot habituel, sont le tube 53 rempli de matières premières 59 et le dispositif 54 d'alimentation en matières pulvérulentes. Cette modification du cubilot a permi de créer une zone tampon 60 par où transitent les fumées avant d'être évacuées entre le tube externe 53 et le tube interne 61 qui prolonge la trémie 55. En fonctionnement normal la pression dans la zone tampon est faible, de l'ordre de 1000 Pa.

C'est dans cet espace que l'invention introduit des matières pulvérentes. Le dispositif de l'invention doit permettre :
. d'introduire en quantités dosées les poudres ou les granulés,
. d'éviter qu'elles ne soient entraînées avec les fumées,
. d'empêcher la sortie des fumées par l'orifice d'entrée 62 des poudres ou granulés.

La première et la troisième fonctions sont remplies par le dispositif 63 en amont du canal 54, la deuxième l'est par un filtre qui piège les particules 64 qu'on vient d'introduire et leur permet de rejoindre les matières premières 59. Un tel filtre est nécessaire, en effet, en son absence, les particules 64 seraient directement entraînées vers la sortie des fumées (pour être dans la majorité des cas récupérées dans le cyclone situé entre la sortie des gaz et la cheminée).

Sur la figure, le filtre est constitué par l'ensemble des matières premières 59 constituées de blocs ou de briquettes et situées entre le bas 65 de la zone tampon 60 et la sortie des gaz en 66, entre les deux tubes 53 et 61. Ce trajet est suffisamment long et encombré pour que des particules 64 dans la mesure où elles ne sont pas trop fines puissent être arrêtées et commencent alors à descendre avec le reste de la composition. Des particules très fines comme les poussières qu'on a recueillies dans les fumées à l'aide du cyclone en aval du canal de sortie 56 risqueraient de reprendre dans le même sens le chemin qu'elles avaient déjà suivi entre les blocs. Ce sont les conditions expérimentales qui permettent de connaître la limite inférieure de la taille des particules à introduire à ce niveau.

Le dispositif 63 conforme à l'invention comporte un tube où ce sont les matières pulvérulentes elles-mêmes, en masse compacte qui assurent l'étanchéité entre la zone à alimenter et l'extérieur.

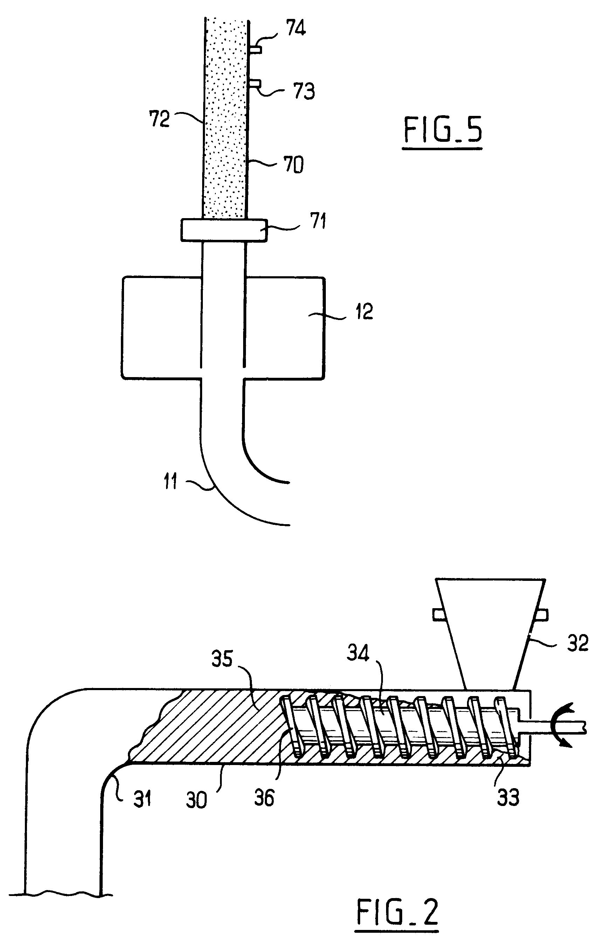

La **figure 2** montre un exemple de réalisation d'un tel dispositif,

On voit sur la figure un tube de diamètre 140 mm qui comporte une partie rectiligne 30 et un coude 31. Dans l'axe de la partie rectiligne, est placée une vis sans fin 34 mue en rotation grâce à un moto-variateur non représenté. Une trémie latérale 32 placée dans la partie supérieure du tube 30, en amont, permet d'alimenter la vis avec des matières 33 qui sont entraînées par la vis 34 vers la gauche de la figure. L'inclinaison du tube 30 sur l'horizontale n'est pas un facteur déterminant. La fonction de la vis 34 en mouvement est de créer un "bouchon" 35 de matières qui remplit complètement le tube 30 sur une longueur (l'"épaisseur" du bouchon) de par exemple 20 cm. Cette longueur peut varier, elle dépend de la nature et de la consistance des matières à introduire. L'exigence est qu'elle doit être suffisante pour que le "bouchon" 35 assure l'étanchéité entre l'aval où règne une pression de, par exemple 1000 pascals et l'amont qui est en général à la pression atmosphérique. L'épaisseur du bouchon 35 sera ainsi par exemple plus importante s'il s'agit d'introduire des déchets de laine de roche déchiquetés que s'il s'agit de poudres de matières premières.

Le fonctionnement du dispositif à vis sans fin est très souple. Il suffit en effet que la longueur disponible entre l'extrémité 36 de la vis 34 et le coude 31 du tube soit supérieure ou égale à l'épaisseur de "bouchon" nécessaire pour éviter le retour des gaz de l'aval vers l'amont et alors, le système fonctionne quelles que soient les vitesses d'introduction des matières dans la trémie 32 et/ou de rotation de la vis sans fin.

Les dispositifs représentés figures 1 et 2 sont utilisés pour recycler des déchets produits lors de la fabrication de laine de roche par exemple par la technique de "centrifugation libre" décrite plus haut.

Dans cette technique, toute la matière vitreuse fondue produite par le cubilot n'est pas transformée en fibres. Une partie importante se trouve sous forme d'infibrés ("slugs") c'est-à-dire de particules solides qui - à la différence des fibres qui, elles, sont entraînées latéralement par un jet d'air - tombent sous la machine en entraînant quelques fibres. Habituellement ces déchets sont agglomérés en briquettes et réintroduits ultérieurement dans le cubilot avec la composition nouvelle.

La technique de l'invention permet de réintroduire ces déchets, pratiquement au même endroit que les briquettes mais sans avoir besoin de les transformer ni même de les stocker. Lors des essais, on a réussi à atteindre des proportions pondérales d'infibrés recyclés par rapport à la composition totale de l'ordre de 10 % en n'utilisant qu'un seul dispositif.

L'invention permet non seulement l'introduction de matières pulvérulentes dans une zone comme la zone tampon 60 de la figure 1 là où les pressions sont faibles mais également dans des zones où la pression est forte, comme par exemple les tuyères d'alimentation en gaz comburant où elle peut atteindre 7 ou 8000 pascals ou même d'avantage.

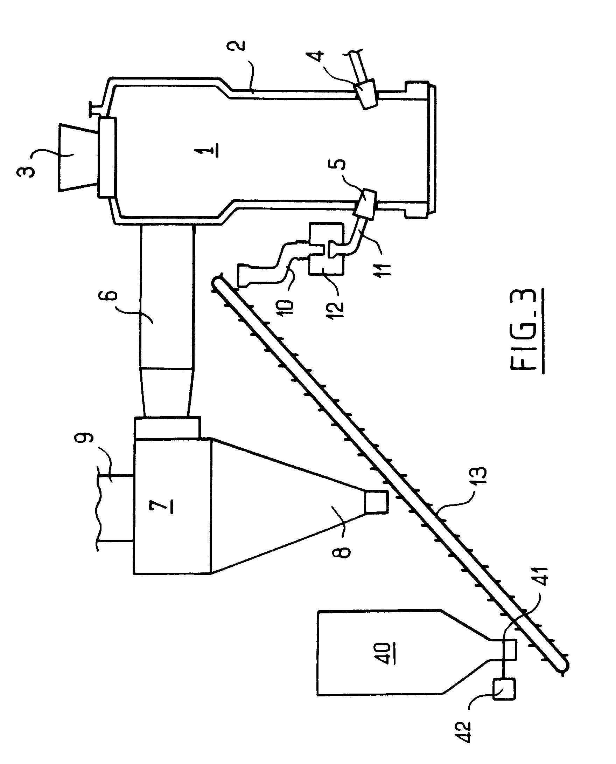

La **figure** **3** montre un cubilot 1 dans sa variante classique avec ses parois doubles 2 refroidies par circulation d'eau, son orifice d'enfournement 3 au niveau habituel, deux de ses tuyères 4, 5 d'alimentation en air chargé d'oxygène, son extracteur de fumées 6 qui mène au cyclone 7 qui extrait les poussières qui tombent alors dans l'entonnoir 8 tandis que les fumées partent vers la cheminée par le conduit 9. Pour permettre l'extraction des poussières, la sortie de l'entonnoir 8 est équipée d'une vanne à clapet non représentée. Sur cette même figure 1, on voit en 40, représenté une trémie destinée à contenir des matières premières en poudre qu'il s'agit d'introduire dans le cubilot pour ajuster la composition. Il peut s'agir par exemple de sable, de dolomie, etc.. A la sortie de la trémie, une vanne doseuse 41, commandée par le mécanisme 42 permet d'ajuster le débit des adjuvants aux besoins.

A leur sortie du cyclone 7, les poussières chaudes (temérature supérieure à 150°C) de même que les matières premières en poudre à la sortie de la trémie 40 sont prises en charge par un transporteur 13 qui les entraîne vers un dispositif doseur 10 de l'invention. La fonction de celui-ci est de les introduire dans la canalisation 11 de la tuyère 5 au rythme où elles arrivent. L'introduction se fait au niveau de la boite à vents 12. Il s'agit d'une canalisation qui fait le tour du cubilot et qui alimente les tuyères en air chaud (env. 500°C) chargé en oxygène.

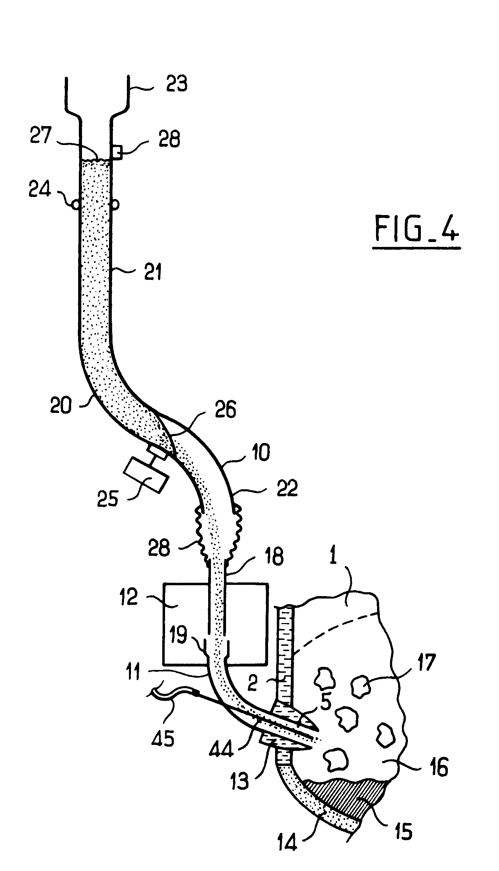

La **figure 4** montre le détail d'un dispositif doseur. Sur la figure, on a représenté le cubilot 1 avec son waterjacket 2, la tuyère 5 avec son extrémité refroidie 13. La tuyère représentée ici comporte - à la différence de celle de la figure 3 - une lance à oxygène 44 alimentée par le conduit 45. Celle-ci se trouve dans l'axe de la tuyère. Le fond du cubilot comporte un pisé dont on voit la limite supérieure 14. Au fond du cubilot, de la fonte liquide 15 est recouverte de la masse vitreuse liquide 16 dans laquelle on trouve aussi du coke solide 17.

La boite à vents 12 sert à alimenter les tuyères, l'air y est à une pression de 8000 Pa et, dans le conduit 11 de la tuyère, sa vitesse est de 70 m/s. Le dispositif 10 comporte deux parties, une partie haute 20 faite d'un tube avec le diamètre de, par exemple, 150 mm et une partie basse qui est un tube rectiligne vertical 18 de 70 mm de diamètre. Ce tube 18 est fixé de manière étanche transversalement à la partie supérieure de la boite à vents 12, juste en face de l'orifice du canal d'alimentation 11 de la tuyère 5. La partie 19 du canal 11 qui est vis à vis du tube 18 est élargie jusqu'à un diamètre de 128 mm. Les deux orifices des tubes 18 et 19 coaxiaux sont dans le même plan.

La zone haute 20 du dispositif 10 possède une partie supérieure rectiligne verticale 21 et une partie inférieure également verticale 22 qui est décalée latéralement. Entre les deux, une zone en S est prévue. Enfin dans la partie supérieure, une embouchure élargie 23 garantit un remplissage facile avec le transporteur 13. Le tube 20 est en une matière qui résiste bien à la température et à l'abrasion des poussières issues des fumées par exemple en acier. Il est fixé en partie haute par un collier et il est équipé en partie basse d'un vibreur 25. La liaison avec le tube 18 de diamètre plus petit est réalisée par un manchon souple 28 en un matériau adapté tel que l'amiante ou tel qu'un tissu siliconé.

Le principe du fonctionnement du dispositif 10 est le suivant : alors que le tube 20 est désolidarisé de la boite à vent 12, par exemple grâce à une vanne placée sur le tube 18 non représentée, on remplit rapidement le tube 20 de poudre prélevée par exemple à la sortie de l'entonnoir 8 du cyclone 7. Il se forme alors en 26, un talus qui bloque la descente de la poudre. Lorsque la poudre atteint un niveau 27 déterminé à l'avance, on arrête le remplissage. Le système est amorcé et peut alors fonctionner : la vanne sur le tube 18 est ouverte, la poudre est amenée en 23 par le transporteur 13 et le vibreur 25 est mis en action aussi souvent que nécessaire pour que le tube se vide par le bas et que le niveau 27 soit gardé identique. Pour un fonctionnement automatique, on a placé au même endroit, un détecteur de niveau 28, c'est par exemple une sonde de température qui détecte la présence de la poudre chaude à l'intérieur du tube. Dès que la poudre n'est plus en face du détecteur 28, le vibreur 25 s'arrête et comme l'arrivée de poudre est permanente, le niveau remonte immédiatement et le vibreur se remet à fonctionner dès que le niveau fixé est atteint.

D'une manière générale, qu'il s'agisse seulement de réintroduire intégralement et en continu un type de déchet produit par l'unité elle-même ou qu'on désire y ajouter des quantités déterminées de matières premières pulvérulentes, l'homme du métier déterminera simplement par des essais quelles valeurs de paramètres il y a lieu de choisir pour :
- le diamètre du tube 20
- la pente de la zone intermédiaire, là où se forme le talus 26
- la hauteur de la colonne de poudre (entre 26 et 27) pour compenser la surpression dans la boite à vent.

On a vu que pour les poussières récupérées dans les fumées d'un cubilot de fabrication de laine de roche, qui ont une taille de grains inférieure à 1 mm, le diamètre 150 mm convenait pour le tube 20, la pente de la zone intermédiaire du tube 20, là où se trouve le vibreur 25 était de 45° et la différence de niveau entre le talus 26 et le niveau supérieur, de 1,10 m. Le vibreur était du type à excentrique et sa fréquence de battemnts de 7500 à la minute.

Les paramètres précédents permettent sans aucun problème d'introduire dans une seule tuyère toutes les poussières récupérées dans les fumées du cubilot par le cyclone c'est-à-dire, des quantités pouvant atteindre plus de 100 kg à l'heure. Le système qui vient d'être décrit qui ne comporte aucun élément mécanique mobile dans la poudre est particulièrement adapté à l'introduction de matières pulvérulentes abrasives dans le cubilot.

Sur **la** **figure 5,** on présente une variante du dispositif 10 de la figure 3, également avec un tube dressé. La différence essentielle avec le système à vibrateur est que le tube est rectiligne et qu'il est équipé en partie basse d'une vanne.

Sur la figure, on voit en 12 la boite à vent et en 11, le canal qui aboutit à la tuyère.

Le tube 70 est donc dressé, par exemple à la verticale. Sa partie basse se termine par une vanne 71 ; les essais ont été effectués avec une vanne-guillotine. La vanne est ouverte juste assez pour laisser passer le débit de matières pulvérulentes souhaité. Celles-ci sont stockées en 72 sur la hauteur suffisante pour empêcher les gaz sous pression dans la boite à vent de refluer vers l'extérieur. Le niveau des matières pulvérulentes 72 qui doit rester stable en fonction des paramètres : nature de la poudre, débit à assurer et pression des gaz, est maintenu grâce aux deux détecteurs de niveau 73 et 74 qui peuvent être thermiques comme celui 28 de la figure 4 ou mécaniques à palpeurs ou même optiques.

Le choix entre le premier dispositif, celui de la figure 2, et les deux autres (figures 4 et 5) dépend de la nature du matériau à introduire. Les poudres abrasives comme les poussières récupérées dans les fumées issues d'un cubilot de fabrication de laine de roche sont par exemple incompatibles avec la vis sans fin car l'usure est trop importante mais en revanche le système "passif" de la figure 5 convient très bien à ces poussières.

De même, les matières divisées légères qui comprennent par exemple beaucoup de déchets de fibres sont mal adaptées aux tubes dressés des figures 4 et 5 car, pour réaliser l'étanchéité, en particulier par rapport aux boites à vent, il faut des hauteurs de matières trop importantes dans les tubes.

Les deux techniques qu'on vient de décrire constituent deux exemples de mise en oeuvre du principe de l'invention, selon lequel c'est la matière à introduire dans les tuyères qui constitue elle-même le bouchon entre l'aval à pression plus élevée et l'amont à la pression atmosphérique ou entre l'extérieur à l'atmosphère et l'intérieur où sont des gaz toxiques. Il est bien évident que d'autres dispositifs non décrits ici permettent de remplir la même fonction, ils sont également couverts par le présent document. La présentation des matières à introduire est importante, les poudres conviennent évidemment mais également les grains à condition qu'ils ne soient pas trop gros ou qu'ils soient compressibles comme c'est le cas avec les nodules obtenus par déchiquetage de matelas fibreux.

L'invention qu'on vient de décrire se caractérise par sa grande simplicité, sa rusticité même : des moyens très simples, bon marché, peu consommateurs en énergie - puisque le tube dressé, par exemple, utilise la pesanteur comme moyen d'action - permettent de réaliser beaucoup plus simplement que l'art antérieur, l'introduction d'éléments divisés, directement dans les fumées ou dans les tuyères d'alimentation de gaz comburant des cubilots ou hauts-fourneaux.

Dans le cas de la réintroduction de déchets comme les "slugs" ou les poussières recueillies dans les fumées, l'avantage de l'invention est encore plus net puisque d'une part la coûteuse fabrication de briquettes n'est plus nécessaire et que dans le cas des poussières des fumées, la réintroduction se fait avant refroidissement (économie sur l'énergie de réchauffage).

L'invention fournit d'autre part un moyen simple pour réintroduire dans le cubilot d'une unité de fabrication de laine de roche des déchets exogènes comme par exemple des isolants fibreux (laine de verre ou de roche) provenant des industries fabriquant des appareils isolés thermiquement et contraintes par les réglementations de protection de l'environnement de reprendre les appareils usagés et d'en recycler les constituants.

## Revendications

1. Procédé pour l'introduction de matières dans les gaz d'un réacteur tel qu'un haut-fourneau ou un cubilot, **caractérisé en ce** que les matières sont pulvérulentes **et en** **ce que** ce sont les matières pulvérulentes elles-mêmes, en masse compacte, qui assurent l'étanchéité entre la zone à alimenter et l'extérieur.

2. Procédé selon la revendication 1, **caractérisé en ce** **que** l'introduction est effectuée dans les tuyères d'alimentation du réacteur en gaz.

3. Procédé selon la revendication 1, **caractérisé en ce** **que** l'introduction est effectuée dans les gaz issus du réacteur au cours de leur trajet vers la sortie.

4. Application du procédé selon l'une des revendications 1 à 3 à l'introduction dans le réacteur de matières premières.

5. Application du procédé selon l'une des revendications 1 à 3 au recyclage dans le réacteur, de déchets endogènes ou exogènes, si nécessaire, après broyage ou déchiquetage.

6. Application du procédé selon la revendication 2 et la revendication 5 au recyclage dans le réacteur des poussières recueillies dans les gaz qui en sont issus.

7. Application du procédé selon la revendication 5 à la fabrication de produits fibreux dans laquelle ce sont les grains infibrés qui sont recyclés dans le réacteur.

8. Dispositif pour l'introduction de matières pulvérulentes dans les gaz d'un réacteur, **caractérisé en ce qu'**il comporte un tube transportant les matières à introduire sous forme pulvérulente qui y forment un bouchon dont l'épaisseur est telle qu'elles s'opposent au passage des gaz.

9. Dispositif selon la revendication 8, **caractérisé en** **ce que** le tube transportant les matières pulvérulentes débouche dans une zone du réacteur où transitent les gaz avant d'en sortir.

10. Dispositif selon la revendication 9, **caractérisé** **en ce que** le tube transportant les matières pulvérulentes débouche dans une zone où les gaz brulés sortant d'un cubilot ou d'un haut fourneau transitent avant de traverser un dispositif de filtrage pour atteindre la sortie des fumées.

11. Dispositif selon la revendication 10, **caractérisé** **en ce que** le dispositif de filtrage est constitué par les matières premières elles-mêmes que les gaz brulés doivent traverser avant de sortir.

12. Dispositif selon la revendication 8, **caractérisé** **en ce que** le tube transportant les matières pulvérulentes débouche dans une canalisation d'alimentation en gaz du réacteur et en particulier dans les tuyères d'alimentation en air ou en oxygène d'un cubilot ou d'un haut fourneau.

13. Dispositif selon l'une des revendications 8 à 12, **caractérisé en ce qu'**il comporte une alimentation en matières pulvérulentes qui alimente une vis sans fin en rotation dans un tube.

14. Dispositif selon l'une des revendications 8 à 12, **caractérisé en ce qu'**il comporte un tube dressé rempli de matières pulvérulentes jusqu'à un niveau minimum et dont la base est obturée.

15. Dispositif selon la revendication 14, **caractérisé** **en ce que** la base du tube est obturée par une vanne-guillotine commandée pour maintenir l'épaisseur du bouchon de matières pulvérulentes supérieure à une valeur minimale.

16. Dispositif selon la revendication 14, **caractérisé** **en ce qu'**il comporte un tube dressé contenant les matières pulvérulentes avec sa partie inférieure coudée et un vibreur en partie basse du tube commandé par un système de maintien d'un niveau défini dans le tube.

17. Application du dispositif selon l'une des revendications 8 à 16 de l'introduction de grains infibrés, lors d'une production de fibres minérales, dans un cubilot.

18. Application du dispositif selon l'une des revendications 14 à 16 à l'introduction dans un cubilot ou un haut fourneau des poussières recueillies dans les fumées.
